# EUROPEAN PATENT APPLICATION

(11) **EP 4 752 274 A1**
(43) Date of publication of application: **03.06.2026**
(21) Application number: 24872744.8
(22) Date of filing: 26.08.2024
(51) Int. Cl.: D06F 58/26, D06F 39/10, D06F 58/24

(54) **GARMENT PROCESSING APPARATUS**

(30) Priority: 26.09.2023 KR 20230129327
(71) Applicant: LG Electronics Inc., Yeongdeungpo-gu Seoul 07336 (KR)
(72) Inventor: SANG, Minkyu, Seoul 08592 (KR); LEE, Kyuchul, Seoul 08592 (KR); SEO, Jikyung, Seoul 08592 (KR); KIM, Dongyeon, Seoul 08592 (KR)
(74) Representative: Vossius & Partner Patentanwälte Rechtsanwälte mbB
(86) International application number: PCT/KR2024/012674
(87) International publication number: WO 2025/071036

(57) **Abstract**

The present application relates to a garment processing apparatus comprising: a cabinet comprising a front panel having an introduction opening, a rear panel for forming the rear surface, an upper panel for forming the upper surface, and a first side panel and a second side panel for forming both side surfaces, respectively; a tub comprising a tub body provided inside the cabinet to store water, and a tub introduction opening provided in the tub body so as to communicate with the introduction opening; a drum rotatably provided inside the tub so as store garments; an air supply unit comprising a chamber body positioned between the upper panel and the tub body, a filtering chamber and a heat-exchange chamber provided in the chamber body and connected to each other, a chamber supply channel for guiding air inside the tub body to the filtering chamber, and a tub supply channel for guiding air discharged from the heat exchange hamber to the tub body; a filtering unit provided in the filtering chamber so as to filter air, and a heat exchange unit provided in the heat exchange chamber so as to successively perform dehumidification and heating of the air supplied from the filtering chamber. The chamber body has at least two surfaces fixed to the cabinet so as to be positioned between the tub body and the upper panel.

## Description

### [Technical Field]

The present disclosure relates to a laundry treating apparatus.

### [Background]

A laundry treating apparatus is a concept that includes a washing machine that washes an object-to-be-washed (hereinafter, referred to as laundry), a dryer that dries an object-to-be-dried (hereinafter, referred to as the laundry), and a washer-drier combination that may wash and dry the laundry.

The laundry treating apparatuses that may dry the laundry remove moisture from the laundry by supplying high-temperature air (hot air) to the laundry, and are able to be categorized into an apparatus with an exhaust-type drier and an apparatus with a circulation-type (condensation-type) drier depending on an air flow scheme.

The exhaust-type drier operates in a scheme of supplying hot air to a space where the laundry is stored, but discharging air that has completed heat exchange with the laundry to the outside of the laundry treating apparatus, and the circulation-type dryer operates in a scheme of supplying hot air to the space where the laundry is stored, but supplying air that has completed the heat exchange with the laundry back to the laundry after dehumidification and heating.

The laundry treating apparatus equipped with the circulation-type dryer includes an air supply that forms a circulation flow channel of air, and a heat exchanger assembly that performs the dehumidification and the heating of air flowing along the air supply.

Because the air supply and the heat exchanger assembly described above may have great volumes and may generate vibration or noise, installation locations and fixing structures of the air supply and the heat exchanger assembly inside the laundry treating apparatus with a limited space were among important design considerations.

In addition, the laundry treating apparatus equipped with the circulation-type dryer has a possibility that foreign substances discharged from the laundry during a drying process may flow into the air supply or the heat exchanger assembly and remain in the air supply or the heat exchanger assembly. Therefore, filtration and removal of the foreign substances were also among the important design considerations of the laundry treating apparatus.

### [Disclosure]

### [Technical Problem]

The present disclosure is to provide a laundry treating apparatus that may improve durability of an air supply and a heat exchanger assembly and minimize noise and vibration.

In addition, the present disclosure is to provide a laundry treating apparatus that may reduce a space required for installation of an air supply and a heat exchanger assembly.

In addition, the present disclosure is to provide a laundry treating apparatus that may minimize inflow of foreign substances to an air supply and a heat exchanger assembly.

In addition, the present disclosure is to provide a laundry treating apparatus and a method for controlling the laundry treating apparatus that may effectively remove foreign substances remaining in a circulation flow channel of air.

### [Technical Solutions]

The present disclosure provides a laundry treating apparatus including a cabinet including a front panel with a laundry inlet defined therein, a rear panel forming a rear surface, a top panel forming a top surface, and a first side panel and a second side panel forming both side surfaces, a tub including a tub body disposed inside the cabinet to store water therein and a tub inlet defined in the tub body and in communication with the laundry inlet, a drum rotatably disposed inside the tub to store laundry therein, an air supply including a chamber body positioned between the top panel and the tub body, a filtration chamber and a heat exchange chamber disposed in the chamber body and in communication with each other, a chamber supply flow channel guiding air inside the tub body to the filtration chamber, and a tub supply flow channel guiding air discharged from the heat exchange chamber to the tub body, a filter disposed in the filtration chamber and configured to filter air, and a heat exchanger assembly that is disposed in the heat exchange chamber and sequentially performs dehumidification and heating of air supplied from the filtration chamber.

At least two surfaces of the chamber body may be fixed to the cabinet and positioned between the tub body and the top panel.

The laundry treating apparatus may further include a front support frame fixed inside the cabinet so as to be positioned between the front panel and the chamber body, and the chamber body may have one end fixed to the upper support frame and the other end fixed to the rear panel.

The front support frame may be fixed to the front panel and positioned at the rear of the front panel, or may be fixed to the first side panel and the second side panel and positioned at the rear of the front panel.

The laundry treating apparatus may further include a front support frame fixed inside the cabinet so as to be positioned between the front panel and the chamber body, and a rear support frame fixed inside the cabinet so as to be positioned between the rear panel and the chamber body, and one end of the chamber body may be fixed to the front support frame and the other end of the chamber body may be fixed to the rear support frame.

The rear support frame may be fixed to the rear panel and positioned in front of the rear panel, or may be fixed to the first side panel and the second side panel and positioned in front of the rear panel.

The laundry treating apparatus may further include an upper support frame fixed to the first side panel and the second side panel and positioned between the top panel and the chamber body, wherein a top surface of the chamber body is fixed to the upper support frame.

The heat exchanger assembly may include a first heat exchanger disposed in the heat exchange chamber to dehumidify air supplied from the filtration chamber, a second heat exchanger disposed in the heat exchange chamber to heat air that has passed through the first heat exchanger, a refrigerant pipe providing a circulation flow channel for a refrigerant and passing through the first heat exchanger and the second heat exchanger, and a compressor located outside the heat exchange chamber to allow the refrigerant to flow along the refrigerant pipe.

The air supply may further include a compressor mounting portion extending from the chamber body toward the rear panel and located above the tub body, wherein the compressor mounting portion provides a space where the compressor is fixed.

The laundry treating apparatus may further include a front surface fastener disposed on the chamber body and fixed to the front support frame, a rear surface fastener disposed on the chamber body and fixed to the rear panel, and a top surface fastener disposed on the chamber body and fixed to the upper support frame.

The laundry treating apparatus may further include a front fixing hole extending through the front support frame, and the front surface fastener may be formed as a fastening protrusion protruding from the chamber body toward the front support frame and inserted into the front fixing hole.

The laundry treating apparatus may further include an insulator disposed in the front fixing hole and surrounding a circumferential surface of the front surface fastener.

The top surface fastener may be disposed to connect the compressor mounting portion with the upper frame.

The laundry treating apparatus may further include a rear panel first through-hole and a rear panel second through-hole defined to extend through the rear panel, and the rear surface fastener may include a support protrusion protruding from the compressor mounting portion and inserted into the rear panel first through-hole, wherein the support protrusion is able to set a location of the chamber body, and a fastening groove defined in the compressor mounting portion, wherein a bolt inserted into the rear panel second through-hole is fixed inside the fastening groove.

The filtration chamber and the heat exchange chamber may be arranged parallel to a width direction of the tub body, and the chamber supply flow channel may connect an upper circumferential surface of the tub body with the filtration chamber, but may be disposed parallel to a longitudinal direction of the tub body.

The laundry treating apparatus may further include a mounting hole extending through the top panel and in communication with the filtration chamber, wherein the filter is detachable from the filtration chamber via the mounting hole.

The filter may include a cover having a shape to close the mounting hole, a support body fixed to the cover and positioned inside the filtration chamber, and a mesh disposed on the support body to remove foreign substances from air.

### [Advantageous Effects]

The present disclosure may provide the laundry treating apparatus that may improve the durability of the air supply and the heat exchanger assembly and minimize the noise and the vibration.

In addition, the present disclosure may provide the laundry treating apparatus that may reduce the space required for the installation of the air supply and the heat exchanger assembly.

In addition, the present disclosure may provide the laundry treating apparatus that may minimize the inflow of the foreign substances to the air supply and the heat exchanger assembly.

In addition, the present disclosure may provide the laundry treating apparatus and the method for controlling the laundry treating apparatus that may effectively remove the foreign substances remaining in the circulation flow channel of air.

### [Description of the Drawings]

FIGS. 1 and 2 show an example of a laundry treating apparatus.
FIG. 3 shows an example of a detergent supply.
FIGS. 4, 5, 6, and 7 show an example of an air supply and a heat exchanger assembly.
FIGS. 8, 9, and 10 show an example of a structure that fixes an air supply and a heat exchanger assembly.
FIG. 11 shows an example of a filter.
FIGS. 12, 13, and 14 show an example of a washer.
FIGS. 15 and 16 show another example of a washer.
FIGS. 17 and 18 show an example of a control method for removing foreign substances remaining in an inlet connector and a chamber supply flow channel.

### [Best Mode]

A configuration of an apparatus or a control method to be described below is only for illustrating an embodiment of the present disclosure and is not intended to limit the scope of the invention, and reference numerals used identically throughout the present document represent identical components.

As used herein, singular expressions may include plural expressions, unless the context clearly dictates otherwise. In the present document, terms such as 'include' or 'have' are only intended to indicate the presence of features, numbers, steps, operations, components, parts, or combinations thereof described herein, and do not preclude the presence or addition of other features, numbers, steps, operations, components, parts, or combinations thereof.

Expressions indicating a relative or absolute arrangement such as "in a certain direction", "along a certain direction", "parallel", "orthogonal", "central", "concentric", "coaxial", or the like not only strictly indicate such arrangement, but also indicate a state in which a relative displacement is achieved with a tolerance, or an angle or a distance that achieves the same function.

In addition, terms including ordinal numbers such as "first", "second", and the like used herein may be used to describe various components, but the components are not limited by the terms, and the terms are used only for the purpose of distinguishing one component from another. Accordingly, a first component may be named a second component, and similarly, the second component may also be named the first component.

In addition, terms such as "front", "rear", "upper", "lower", "side", "front end", "rear end", "upper end", "lower end", and the like used herein are defined based on the drawings or defined based on an arrangement/disposition state of the components, and a shape and a location of each component are not limited by such terms.

Hereinafter, a preferred embodiment of a laundry treating apparatus and a method for controlling the same will be described in detail with reference to the attached drawings.

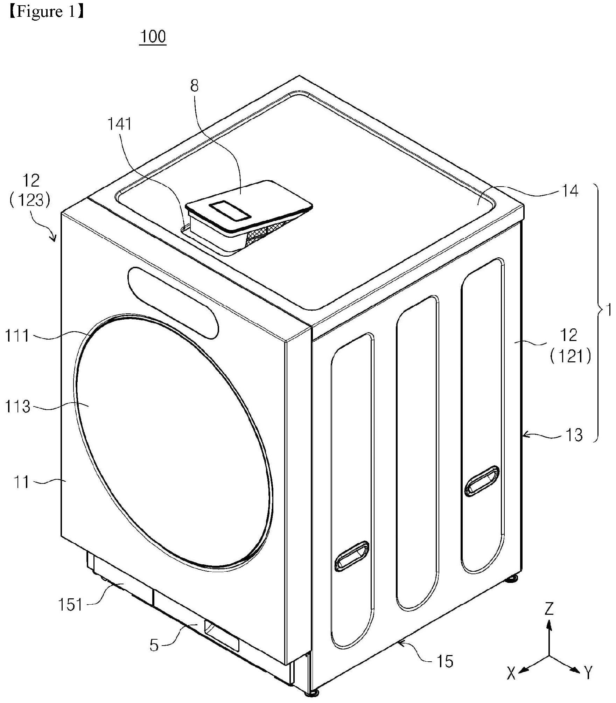

FIG. 1 shows an example of a laundry treating apparatus 100. The laundry treating apparatus 100 may include a cabinet 1 forming an outer appearance thereof.

The cabinet 1 may include a front panel 11 forming a front surface of the laundry treating apparatus, a rear panel 13 forming a rear surface of the laundry treating apparatus, side panels 12 forming both side surfaces of the laundry treating apparatus, and a top panel 14 forming a top surface of the laundry treating apparatus.

The front panel 11 includes a laundry inlet 111 for insertion and withdrawal of laundry. The laundry inlet 111 may be opened and closed by a door 113 pivotably fixed to the front panel 11. The side panels 12 may be composed of a first side panel 121 and a second side panel 123 forming a right side surface and a left side surface of the laundry treating apparatus, respectively.

The laundry treating apparatus 100 may include a base panel 15 forming a bottom surface. In this case, at least one of the front panel, the rear panel, and the side panels may be fixed to the base panel 15.

For example, the first side panel 121 and the second side panel 123 may be fixed to the base panel 15, the front panel 11 may connect front surfaces of the side panels 121 and 123 to each other, and the rear panel 13 may connect rear surfaces of the side panels 121 and 123.

For firm coupling of the front panel 11 and the side panel 12 and firm coupling of the rear panel 13 and the side panel 12, the laundry treating apparatus 100 may further include a connection frame.

The connection frame (not shown) may be a bar-shaped metal or the like, which is fixed to the base panel 15 and extends in a height direction of the cabinet 1. The connection frame may be disposed at a corner where the front panel 11 and the side panel 12 meet each other and a corner where the rear panel 13 and the side panel 12 meet each other.

The top panel 14 may be fixed to top surface edges of the side panels 121 and 123 and a top surface edge of the rear panel 13. Unlike what is shown in the drawing, the top panel 14 may be fixed to a top surface edge of the front panel 11, a top surface edge of the side panel 12, and a top surface edge of the rear panel 13.

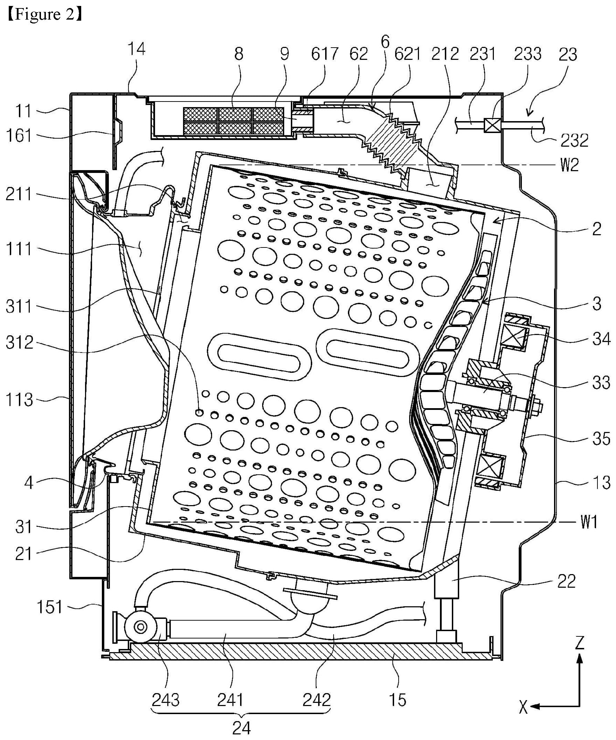

As shown in FIG. 2, the laundry treating apparatus 100 may include a tub 2 disposed inside the cabinet 1 to provide a space for storing water, and a drum 3 rotatably disposed inside the tub to provide a space for storing the laundry.

The tub 2 may include a tub body 21 for storing water, and a tub support 22 that fixes the tub body 21 inside the cabinet 1.

The tub body 21 may be formed in a hollow cylindrical shape, and the tub support 22 may be composed of a damper that fixes a lower space of the tub body 21 to the base panel 15, and a spring that fixes an upper space of the tub body 21 to the cabinet.

The tub body 21 may receive water via a water supply 23 and discharge stored water to the outside of the cabinet 1 via a drainage 24.

The water supply 23 may include a water supply source connection pipe 232 connected to a water supply source, a tub water supply pipe 231 that supplies water to the tub body 21, and a water supply valve 233 that connects the water supply source connection pipe with the tub water supply pipe. The water supply valve 233 may be fixed to the rear panel 13 and control opening and closing of the water supply source connection pipe 232.

The drainage 24 may include a pump 243, a first drainage pipe 241 that guides water inside the tub body 21 to the pump 243, and a second drainage pipe 242 that guides water discharged from the pump 243 to the outside of the cabinet 1.

A tub inlet 211 is defined in a front surface of the tub body 21. The tub inlet 211 may be connected to the laundry inlet 111 of the cabinet via an inlet connector 4. To minimize vibration of the tub body 21 from being transmitted to the front panel 11, the inlet connector 4 is preferably made of a material such as rubber.

The drum 3 may be composed of a hollow cylindrical drum body 31. A drum inlet 311 may be defined in one surface of the drum body 31 (one surface of the drum body facing the tub inlet), and a drum through-hole 312 that allows the inside of the drum body to be in communication with the inside of the tub body may be defined in a circumferential surface, a rear surface, and the like of the drum body 31.

The drum body 31 is rotatable via a driver. The driver may include a stator 34 fixed to a rear surface of the tub body 21 to form a rotating magnetic field, a rotor 35 positioned outside the tub body 21 to rotate by the rotating magnetic field, and a rotational shaft 33 extending through the rear surface of the tub body 21 to connect the drum body 31 with the rotor 35.

To supply detergent to the tub body 21, the laundry treating apparatus 100 may be equipped with a detergent supply 5.

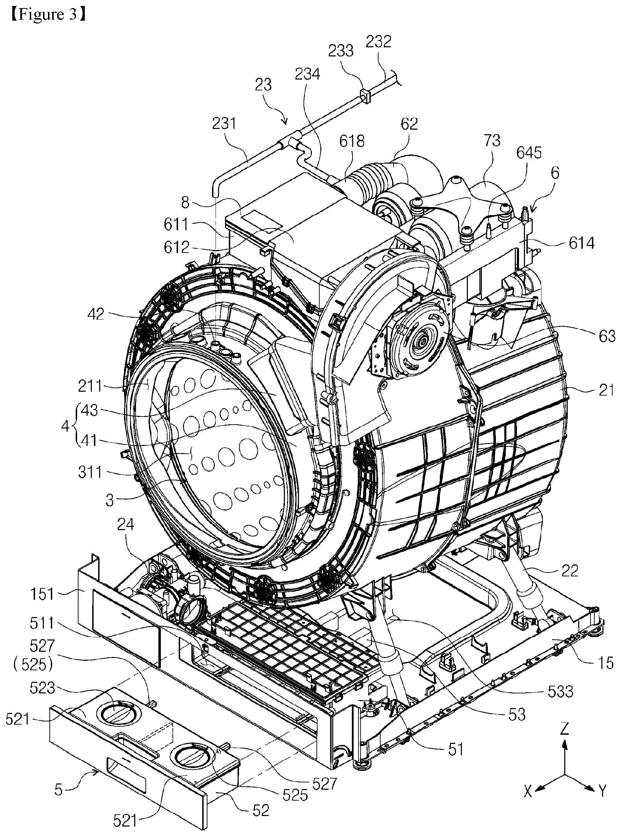

As shown in FIG. 3, the detergent supply 5 may include a housing 51 fixed to the cabinet 1, a drawer 52 that provides a space for storing the detergent and is able to be extended from the housing 51, and a supply pump 53 that allows the detergent stored in the drawer to flow to the tub body 21.

The housing 51 may be fixed to the base panel 15 or may be fixed to a mounting panel 151 fixed to the base panel 15. The mounting panel 151 may be equipped as a panel that is fixed to the base panel 15 and located on the front surface of the cabinet 1.

A drawer inlet 511 for retraction and extension of the drawer 52 is defined in a front surface of the housing 51. A mounting panel through-hole exposing the drawer inlet 511 may be defined in the mounting panel 151.

The drawer 52 may include a storage 521 that provides a space for storing the detergent, a detergent supply port 523 through which the detergent may be injected into the storage 521, a detergent discharge port 525 through which the detergent from the storage 521 is discharged, and a valve 527 that controls opening and closing of the detergent discharge port. The detergent supply port 523 may be defined as a top surface through-hole extending through a top surface of the storage 521, and may be opened and closed by a lid.

The valve 527 may be equipped as a check valve that controls the opening and the closing of the detergent discharge port 525 by the supply pump 53. That is, the valve 527 may open the detergent discharge port 525 when the drawer 52 is retracted into the housing 51 and an inflow pipe of the supply pump 53 comes into contact with the valve 527, and close the detergent discharge port 525 when the drawer 52 is extended from the housing 51 and the inflow pipe of the supply pump 53 does not come into contact with the valve 527.

The supply pump 53 may be equipped as a pump of various structures as long as it may allow the detergent discharged via the detergent discharge port 525 to flow to the tub body 21.

The detergent discharged from the supply pump 53 is supplied to the tub body 21 via a detergent supply pipe 533. The detergent supply pipe 533 may be equipped as a flow channel connecting the supply pump 53 with a circumferential surface of the tub body 21 or as a flow channel connecting the supply pump 53 with the inlet connector 4.

The inlet connector 4 may be equipped as a connection body 41 connecting the laundry inlet 111 of the cabinet with the tub inlet 211. In this case, the detergent supply pipe 533 may be equipped as a flow channel connecting the supply pump 53 with the connection body 41. In addition, the connection body 41 may be equipped with a water supply flow channel 42 to which the tub water supply pipe 231 is connected.

Although not shown in the drawing, when the laundry treating apparatus 100 is equipped with a circulation flow channel that circulates water inside the tub body 21, the detergent supply pipe 533 may connect the supply pump 53 with the circulation flow channel.

To dry the laundry stored in the drum body 31, the laundry treating apparatus 100 may be equipped with an air supply 6 and a heat exchanger assembly 7.

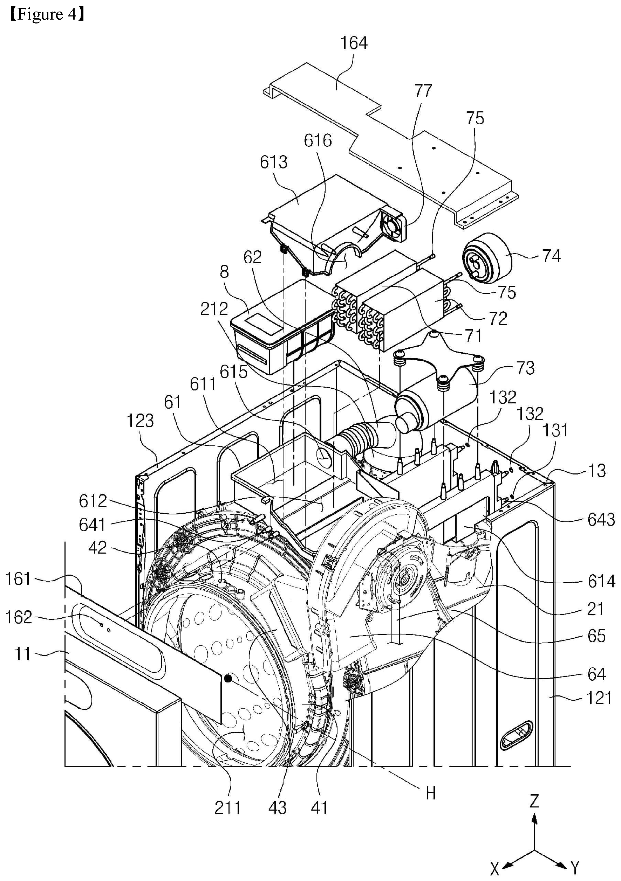

As shown in FIG. 4, the air supply 6 may include a body (chamber body) 61 located in the upper portion of the tub body 21 and having chambers 611 and 612 disposed therein, a chamber supply flow channel 62 that guides air inside the tub body 21 to the chambers, and a tub supply flow channel 63 that guides air discharged from the chamber to the tub body 21.

The chambers disposed in the body 61 may include a filtration chamber 611 in which a filter 8 is mounted, and a heat exchange chamber 612 in which heat exchangers 71 and 72 disposed in the heat exchanger assembly 7 are located.

In this case, the chamber supply flow channel 62 may connect a tub exhaust port 212 disposed on the tub body 21 with the filtration chamber 611, and the tub supply flow channel 63 may connect the heat exchange chamber 612 with the inlet connector 4.

As mentioned above, the inlet connector 4 may be equipped as the cylindrical connection body 41 that connects the inlets 111 and 211 of the cabinet and the tub to each other, and an air supply flow channel 43 may be disposed on a circumferential surface of the connecting body 41. In this case, the tub supply flow channel 63 may connect the heat exchange chamber 612 with the air supply flow channel 43.

To minimize heat loss occurring during the flow via the tub supply flow channel 63 and to minimize flow resistance, it is preferable that the air supply flow channel 43 is located above a horizontal line H passing through a center of the connection body 41.

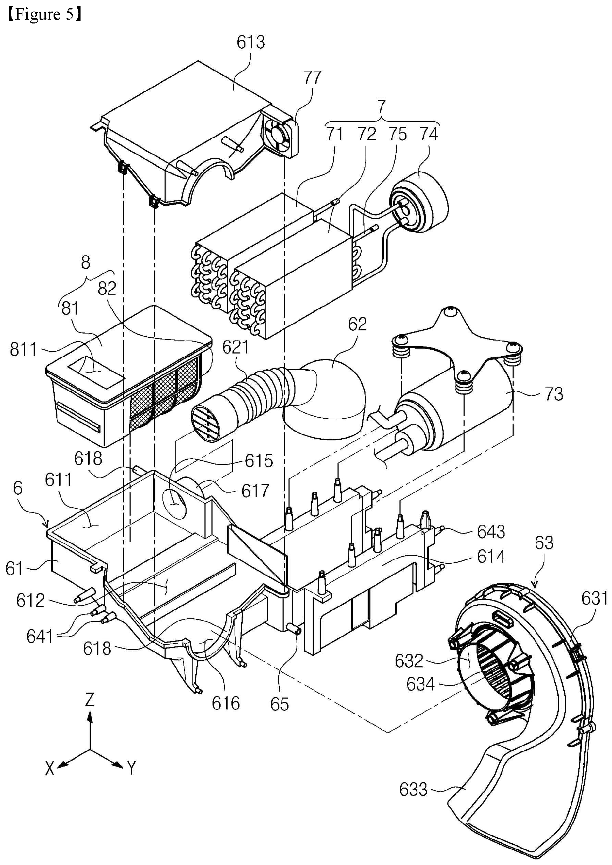

As shown in FIG. 5, the chamber supply flow channel 62 may be equipped as a flow channel having an at least partial area formed as a corrugated pipe 621.

The tub supply flow channel 63 may include a fan housing 631 connecting the heat exchange chamber 612 with the air supply flow channel 43, and a fan 634 disposed inside the fan housing 631 to allow air to flow.

The fan housing 631 may include a housing inlet 632 that guides air discharged from the heat exchange chamber 612 to the fan 634, and a housing outlet 633 that guides air discharged from the fan 634 to the air supply flow channel 43.

The fan 634 may be composed of an impeller that is rotatably fixed inside the fan housing and a motor that is fixed outside the fan housing and rotates the impeller.

The heat exchanger assembly 7 may include a first heat exchanger 71 and a second heat exchanger 72 disposed in the heat exchange chamber 612, a refrigerant pipe 75 that provides a circulation flow channel of a refrigerant and passes through the first heat exchanger 71 and the second heat exchanger 72, a compressor 73 that is located outside the heat exchange chamber 612 and moves the refrigerant along the refrigerant pipe 75, and a pressure regulator 74 that regulates a pressure of the refrigerant circulating along the refrigerant pipe.

The first heat exchanger 71 is a means for cooling air introduced into the heat exchange chamber 612 (a means for removing moisture from air), and the second heat exchanger 72 is a means for heating dehumidified air.

The refrigerant passing through the first heat exchanger 71 will absorb heat from air and vaporize, the vaporized refrigerant will be supplied to the second heat exchanger 72 via the compressor 73, and the refrigerant condensed while passing through the second heat exchanger 72 will be re-supplied to the first heat exchanger 71 via the pressure regulator 74.

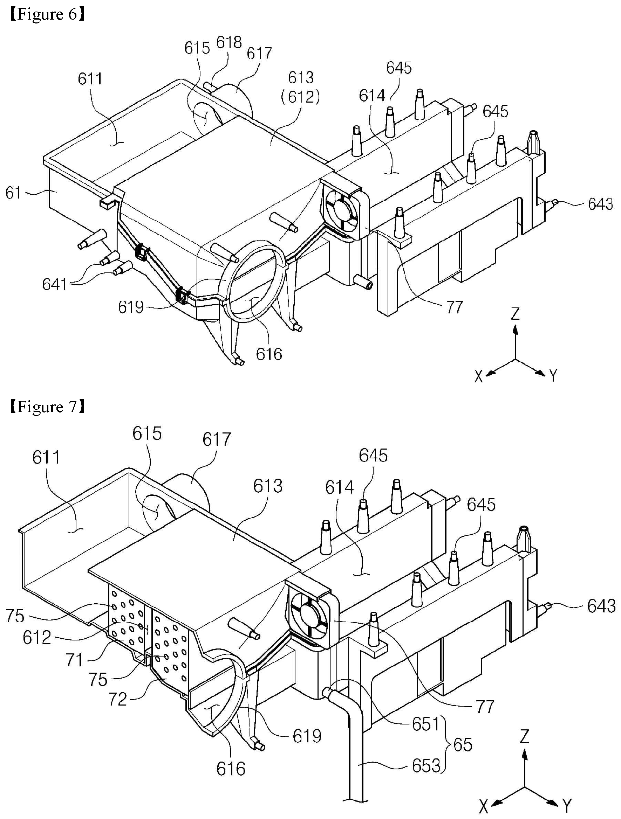

As shown in FIG. 6, the filtration chamber 611 includes an air supply port 615, and the heat exchange chamber 612 includes an exhaust port 616. The air supply port 615 is a means for introducing air supplied from the chamber supply flow channel 62 into the filtration chamber 611, and the exhaust port 616 is a means for discharging air discharged from the heat exchange chamber 612 into the tub supply flow channel 63.

To fix the chamber supply flow channel 62 and the tub supply flow channel 63 to the body 61, the air supply 6 may include a first connector 617 and a second connector 619.

The first connector 617 may be equipped as a pipe-shaped flow channel that is disposed on a rear surface (a surface facing the rear panel) of the body 61 and surrounds the air supply port 615, and the second connector 619 may be equipped as a pipe-shaped flow channel that is disposed on a side surface (a surface facing the first side panel) of the body 61 surrounds the exhaust port 616. When the fan housing 631 is fixed to the body 61, the second connector 619 may be connected to or inserted into the housing inlet 632 of the fan housing.

As shown in FIG. 7, the filtration chamber 611 and the heat exchange chamber 612 may be defined as spaces with open top surfaces. The open top surface of the filtration chamber 611 may be closed by the filter 8 to be described later, and the open top surface of the heat exchange chamber 612 may be closed by a cover 613.

Furthermore, the body 61 may further include a condensate discharger 65 that discharges condensate inside the heat exchange chamber 612.

The condensate discharger 65 may include a condensate discharge port 651 that extends through one surface of the body 61 and is connected to the heat exchange chamber 612, and a condensate discharge pipe 653 that connects the condensate discharge port 651 with the drainage 24.

The body 61 may include a compressor mounting portion 614 that supports the compressor 73.

The compressor mounting portion 614, as a space where the compressor 73 is mounted, may be equipped as a support plate that extends from the body 61 toward the rear panel 13 such that the compressor 73 is positioned upward of the tub body 21.

The body 61 described above defines a single mounting space in which the filtration chamber 611, the heat exchange chamber 612, and the compressor mounting portion 614 are connected to each other without a separate fastening means, so that assembly of the air supply 6 and the heat exchanger assembly 7 is easy.

To control a temperature of the compressor 73 fixed to the compressor mounting portion 614, the heat exchanger assembly 7 may be further equipped with a cooler 77. FIG. 7 shows a case in which the cooler 77 is equipped as a fan fixed to the cover 613 as an example.

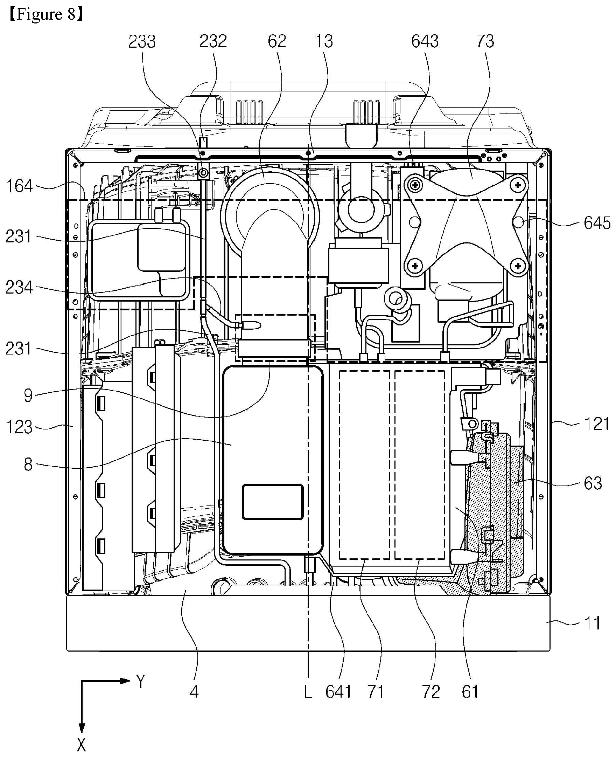

As shown in FIG. 8, it is preferable that the air supply 6 and the heat exchanger assembly 7 described above are located between the top panel 14 and a top surface of the tub body 21.

As described above, because the detergent supply 5, the drainage 24, and the like are disposed under the tub body 21, to install the air supply 6 and the heat exchanger assembly 7 under the tub body 21, a volume of the cabinet 1 should be increased to secure a separate space for installation under the tub body 21. However, when the air supply 6 and the heat exchanger assembly 7 are mounted on the tub body 21, the space required for installing the air supply 6 and the heat exchanger assembly 7 may be minimized (the volume of the cabinet may be minimized).

In one example, to minimize the mounting space of the air supply 6 and the heat exchanger assembly 7 and to minimize a flow resistance (an air flow distance) of air flowing from the tub body 21 to the chamber supply flow channel 62, the filtration chamber 611 and the heat exchange chamber 612 may be arranged parallel to a width direction of the tub body (a Y-axis direction), and the chamber supply flow channel 62 may be disposed parallel to a length direction of the tub body (an X-axis direction).

In addition, it is preferable that, based on a horizontal line L passing through a center of the space above the tub body 21, the chamber supply flow channel 62 is disposed so as to be located closer to the horizontal line L than to the second side panel 123. This is to utilize a space between the horizontal line L and the second side panel 123 as an installation space for a steam generator (that generates steam and supplies steam to the tub), a control module, a detergent supply (that supplies the detergent to the tub), and the like.

Furthermore, the tub supply flow channel 63 may be located in a space defined between the front panel 11, the first side panel 121, and an upper circumferential surface of the tub body 21.

When the air supply 6 and the heat exchanger assembly 7 are located between the top panel 14 and the tub body 21, minimizing transmission of vibration of the tub body 21 to the air supply 6 and the heat exchanger assembly 7 is advantageous for maintaining durability of the air supply 6 and the heat exchanger assembly 7.

To minimize the transmission of the vibration of the tub body 21 to the body 61, the body 61 may be constructed such that at least two surfaces thereof are fixed to the cabinet 1.

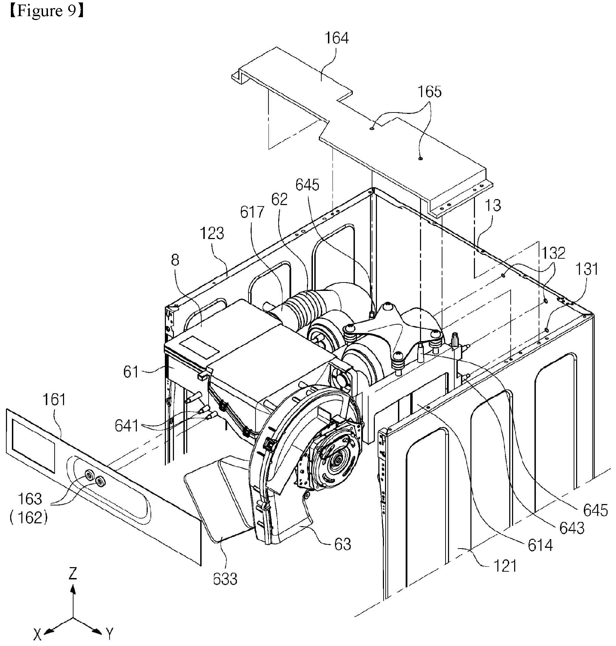

FIG. 9 shows a case in which a front surface of the body 61 is fixed to a front support frame 161 and a rear surface of the body 61 is fixed to the rear panel 13 as an example.

The front support frame 161 may be equipped as a panel that is fixed inside the cabinet 1 and positioned between the front panel 11 and the body 61.

The front support frame 161 may be fixed to the above-described connection frame (not shown) and positioned at the rear of the front panel 11, may be fixed to the front surface of the first side panel 121 and the front surface of the second side panel 123 and positioned at the rear of the front panel 11, or may be fastened to a rear surface of the front panel 11 and positioned inside the cabinet 1.

The body 61 may be fixed to the front support frame 161 and the rear panel 13 via a fastener.

The fastener may include a front surface fastener 641 disposed on the body 61 and fixed to the front support frame 161, and a rear surface fastener 643 disposed on the body 61 and fixed to the rear panel 13.

The front surface fastener 641 may be equipped as a fastening protrusion protruding from one surface (a surface facing the front support frame) of the body 61. In this case, the front support frame 161 may include a front fixing hole 162 into which the front surface fastener 641 is inserted.

To minimize vibration generated in the body 61 during operation of the fan 634 of the air supply or the compressor 73 of the heat exchanger assembly from being transmitted to the front support frame 161 and to minimize vibration of the cabinet 1 from being transmitted to the body 61, an insulator 163 may be further disposed in the front fixing hole 162.

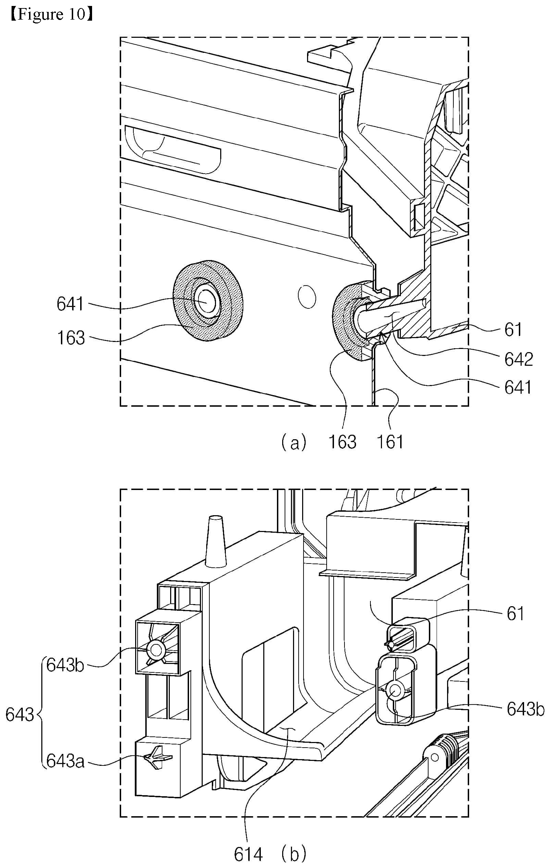

As shown in (a) in FIG. 10, the insulator 163 may be equipped as an elastic body (rubber or the like) that is fixed to the front fixing hole 162 and surrounds a circumferential surface of the front surface fastener 641.

As shown in (b) in FIG. 10, the rear surface fastener 643 may include at least one of a support protrusion 643a and a fastening groove (a rear fastening groove) 643b disposed on and defined in one surface (the surface facing the rear panel) of the body 61.

When the rear surface fastener 643 is composed of the support protrusion 643a and the rear fastening groove 643b, the rear panel 13 may include a rear panel first through-hole 131 and a rear panel second through-hole 132.

As shown in FIG. 9, the rear panel first through-hole 131 may be defined as a hole into which the support protrusion 643a is inserted by extending through the rear panel 13, and the rear panel second through-hole 132 may be defined as a hole that allows a rear fastening member (a bolt or the like) to be coupled to the rear fastening groove 643b.

The front surface fastener 641 and the support protrusion 643a may be means for temporarily assembling the body 61 to the cabinet 1. That is, a worker may temporarily fix a location of the body 61 by inserting the front surface fastener 641 into the front fixing hole 162 and then inserting the support protrusion 643a into the rear panel first through-hole 131.

A description will be made with reference to FIG. 10. In the state in which the body 61 is temporarily assembled to the cabinet 1, the worker may fix the body 61 to the front support frame 161 by fastening a front fastening member (the bolt or the like) to a fastening groove (a front fastening groove) 642 of the front surface fastener, and may fix the body 61 to the rear panel 13 by fixing the rear fastening member to the rear fixing groove 643b.

As shown in the drawing, the front surface fastener 641 may be disposed in a space forming a front surface of the heat exchange chamber 612 of a space provided by the body 61, and the rear surface fastener 643 may be disposed on a rear surface of the compressor mounting portion 614 of the space provided by the body 61. This is because the body 61 may be more stably fixed when the front surface fastener 641 and the rear surface fastener 643 are arranged in a diagonal direction of the body 61.

Unlike the above, the rear surface fastener 643 may be fixed to a rear support frame (not shown) located between the rear surface of the body 61 and the rear panel 13.

The rear support frame may be fixed to the connection frame, may be a panel fixed to the two side panels 121 and 123, and may be fixed to the rear panel 13. The rear support frame may include a support protrusion receiving hole (not shown) into which the support protrusion 643a is inserted, and a communication hole (not shown) in communication with the rear fastening hole 643b.

As shown in FIG. 9, the laundry treating apparatus 100 may further include an upper support frame 164 that fixes at least a partial area of a top surface of the body 61 to the cabinet 1.

The upper support frame 164 may be equipped as a panel that is fixed to the first side panel 121 and the second side panel 123 and positioned between the top panel 14 and the body 61. That is, the upper support frame 164 may be equipped as a panel whose one end is fixed to the top surface of the first side panel 121 and whose other end is fixed to the top surface of the second side panel 123.

The body 61 may be fixed to the upper support frame 164 via a top surface fastener 645. The top surface fastener 645 may be equipped as a fastening protrusion that protrudes from a top surface of the compressor mounting portion 614 and fixes the compressor mounting portion 614 to the upper support frame 164. FIG. 9 shows a case in which the top surface fastener 645 is disposed on each of both side surface edges of the compressor mounting portion 614.

The top surface fastener 645 may include an upper fastening hole to which an upper fastening member (the bolt or the like) is fastened, and the upper support frame 164 may include a top surface fixing hole 165 through which the upper fastening member extends.

When the body 61 is fixed to the cabinet 1 via the front support frame 161, the rear panel 13, and the upper support frame 164, the laundry treating apparatus 100 may stably fix the air supply 6 and the heat exchanger assembly 7 (which is advantageous for maintaining the durability of the air supply and the heat exchanger assembly), and may minimize the vibration of the tub body 21 from being transmitted to the body 61.

In addition, when the body 61 is fixed to the cabinet 1 via the front support frame 161, the rear panel 13, and the upper support frame 164, vibration generated during operation of the fan 634 and the compressor 73 may be transmitted to the side panels 12, the rear panel 13, and the base panel 15, and the vibration transmitted to the base panel 15 may be absorbed by a heavy object such as the tub fixed to the base panel 15. Therefore, the laundry treating apparatus 100 having the above-described structure may minimize the vibration or noise of the fan 634 and the compressor 73.

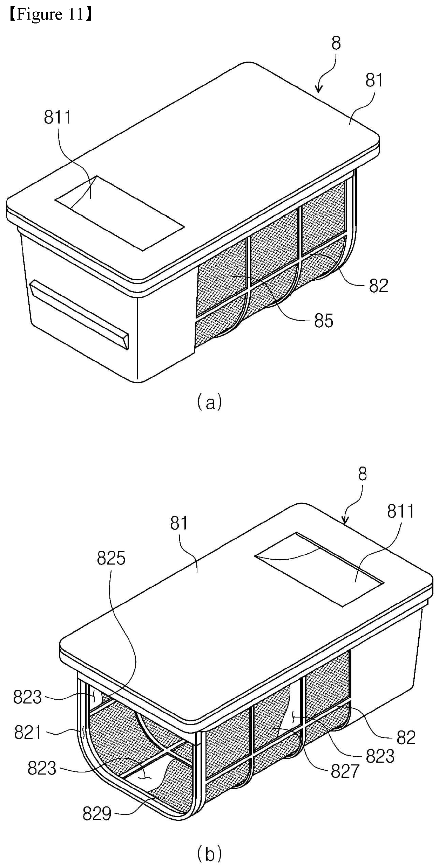

FIG. 11 shows an example of the filter 8. The filter 8 may be detachably disposed in the filtration chamber 611 via the top panel 14.

That is, as shown in FIG. 1, the top panel 14 may further include a mounting hole (a filter mounting hole) 141 that exposes the filtration chamber 611 to the outside of the cabinet 1, and the filter 8 may be inserted into the filtration chamber 611 or withdrawn from the filtration chamber 611 via the mounting hole 141.

As shown in FIG. 11, the filter 8 may include a cover 81 formed in a shape that may close the open top surface of the filtration chamber 611, a support body 82 fixed to the cover 81 and positioned inside the filtration chamber 611, and meshes 825, 826, and 827 disposed on the support body 82 to separate foreign substances from air.

The cover 81 may be formed in various shapes as long as it is able to close the open top surface of the filtration chamber 611 (a chamber communication hole extending through the body to connect the mounting hole with the filtration chamber). FIG. 11 shows a case in which the cover 81 is formed in a shape that may close the chamber communication hole and the mounting hole 141 as an example. The cover 81 may include a handle 811.

The support body 82 is a means for forming a flow channel through which air flows by being fixed to the cover 81. An intake port 821 may be formed on one surface of the support body 82, and multiple through-holes 823 may be defined in surfaces where the intake port is not formed.

The intake port 821 may be disposed on a surface facing the air supply port 615 of the filtration chamber of a space provided by the support body 82, and the through-holes 823 may be defined in both side surfaces and a bottom surface of the support body.

The meshes may include a first mesh 825 fixed to the support body 82 and forming one of a left side surface and a right side surface of the support body, a second mesh 827 fixed to the support body 82 and forming the other of the left side surface and the right side surface of the support body, and a third mesh 829 fixed to the support body 82 and forming the bottom surface of the support body.

Therefore, air supplied to the filtration chamber 611 via the chamber supply flow channel 62 may be supplied into the support body 82 via the intake port 821, and air inside the support body 82 may flow into the heat exchange chamber 612 via the through-holes 823. In this process, the foreign substances contained in air will be filtered by the meshes 825, 827, and 829.

Because the meshes are disposed on three surfaces of the support body 2 (because the filter has three filtering surfaces), a filtration capacity is greater than that of an existing filter having one filtering surface.

The laundry treating apparatus 100 having the above-described structure has a possibility that the foreign substances may remain in the chamber supply flow channel 62.

When the air supply 6 and the heat exchanger assembly 7 are in operation, air dehumidified and heated in the heat exchange chamber 612 is supplied to the tub body 21 via the tub supply flow channel 63.

Air that was supplied into the tub body 21 and has completed heat exchange with the laundry is supplied to the filtration chamber 611 via the chamber supply flow channel 62, and the foreign substances present in air introduced into the filtration chamber 611 are removed by the filter 8. Air from which the foreign substances have been removed by the filter 8 flows to the heat exchange chamber 612 and is dehumidified and heated by the first heat exchanger 71 and the second heat exchanger 72.

In the drying process described above, the foreign substances included in air may be filtered via the filter 8, but some foreign substances may remain in the chamber supply flow channel 62. When the chamber supply flow channel 62 is made of an elastic material such as rubber or has the structure of the corrugated pipe 621, the transmission of the vibration of the tub body 21 to the body 61 is able to be minimized, but a possibility of the foreign substances remaining is not able to be ruled out.

To remove the foreign substances remaining in the chamber supply flow channel 62, the laundry treating apparatus 100 may be equipped with a washer.

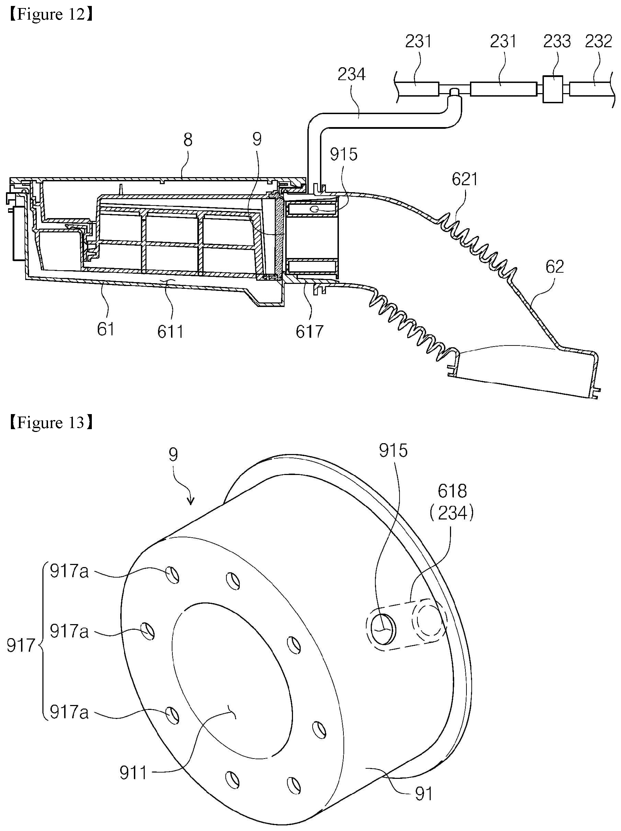

FIG. 12 shows an example of a washer 9 that may remove foreign substances via a ring-shaped water stream sprayed onto an inner circumferential surface of the chamber supply flow channel 62.

The washer 9 may be fixed to the body 61 via the first connector 617. The drawing shows a structure in which the washer 9 is inserted into the first connector 617 and fixed to the body 61 as an example.

The washer 9 may be fixed to the body 61 so as to be located inside the filtration chamber 611, but in this case, when a volume of the filtration chamber 611 is not increased, the filtration capacity may decrease. Therefore, it is preferable that a location of the washer 9 is set based on the filtration capacity of the laundry treating apparatus 100.

The washer 9 may receive water via the water supply 23. That is, the water supply 23 may further include a washer water supply pipe 234 branched from the tub water supply pipe 231 and supplying water to the washer 9. In this case, the laundry treating apparatus 100 will be able to wash the chamber supply flow channel 62 whenever water is supplied to the tub body 21.

FIG. 13 shows an example of the washer 9. The washer 9 may include a washing body 91 inserted into and fixed to the first connector 617, a body through-hole 911 extending through the washing body 91 and introducing air supplied from the chamber supply flow channel 62 into the filtration chamber 611, a ring-shaped washing flow channel 913 surrounding the body through-hole 911, and a supply port 915 extending through the washing body 91 and supplying water to the washing flow channel 913.

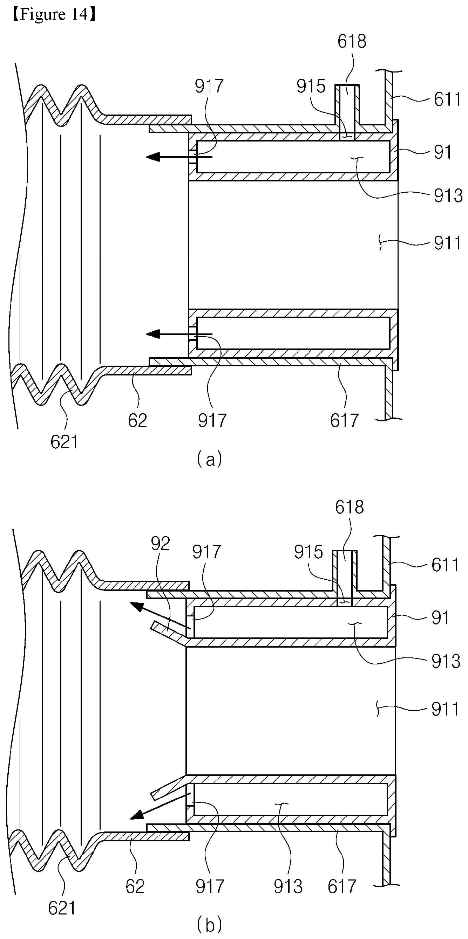

As shown in (a) in FIG. 14, the washing flow channel 913 may be equipped as a circulation flow channel that circulates water introduced into the supply port 915 along a circumferential surface of the body through-hole 911.

One surface of the washing body 91 (one surface of the washing body facing the chamber supply flow channel) may include a sprayer 917 that sprays water inside the washing flow channel 913 onto the inner circumferential surface of the chamber supply flow channel 62. As shown in FIG. 13, the sprayer 917 may include multiple spray holes 917a arranged in a ring shape.

The washer 9 having the above-described structure may form the ring-shaped water stream with water discharged via the sprayer 917, and the ring-shaped water stream may wash the entire inner circumferential surface of the chamber supply flow channel 62. Therefore, the laundry treating apparatus 100 equipped with the washer 9 may minimize the phenomenon of the foreign substances remaining in the chamber supply flow channel 62.

To facilitate the flow of water discharged from the spray hole 917a toward the inner circumferential surface of the chamber supply flow channel 62, the washer 9 may be further equipped with a guide.

As shown in (b) in FIG. 14, the guide 92 may be formed as an inclined surface that extends from an edge of the body through-hole 911 toward an edge of the washing body 91 (the inner circumferential surface of the chamber supply flow channel), but is inclined in a direction away from the washing body 91.

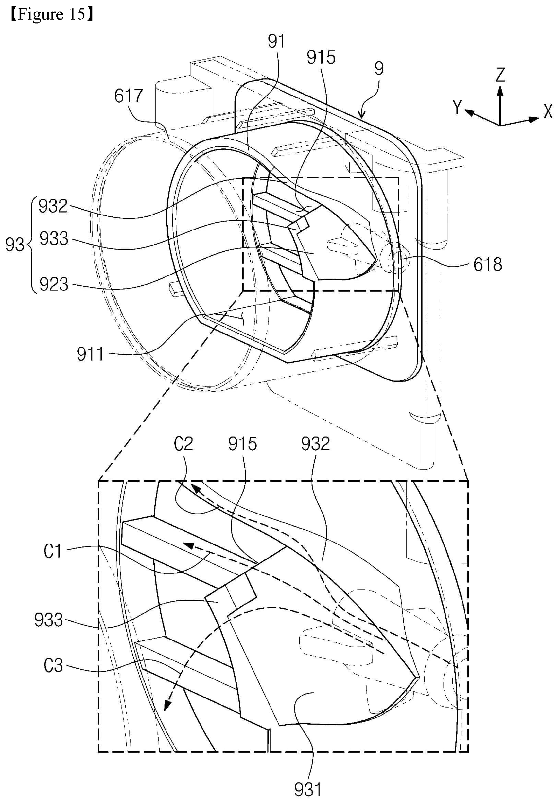

FIG. 15 shows another embodiment of the washer 9.

The washer 9 according to the present embodiment also includes the washing body 91 mounted on the first connector 617, the body through-hole 911 that extends through the washing body 91 and introduces air supplied from the chamber supply flow channel 62 into the chamber, and the supply port 915 that extends through the washing body 91 and is in communication with the body through-hole 911.

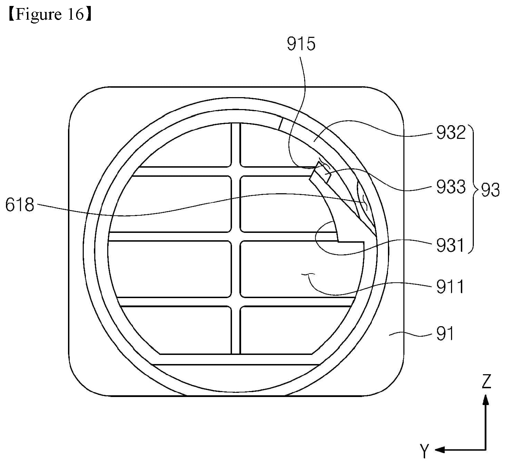

As shown in FIG. 16, the washing body 91 may include a guide 93 that changes water discharged from the supply port 915 into the ring-shaped water stream that rotates along the inner circumferential surface of the chamber supply flow channel 62.

The guide 93 may include a guide first body 931 that is inclined from the washing body 91 toward the supply port 915 and guides water discharged from the supply port 915 to the circumferential surface of the chamber supply flow channel 62, and a guide second body 932 that guides water that flows by the guide first body 931 in a longitudinal direction of the chamber supply flow channel 62 (a -X-axis direction).

The guide second body 932 may be formed as an inclined surface inclined from one surface (a surface facing the filtration chamber) of the guide first body 931 toward the chamber supply flow channel 62.

As shown in FIG. 15, water supplied via a water supply port 618 will form a vortex inside the chamber supply flow channel 62 by a water stream C1 flowing in a direction of the circumferential surface of the chamber supply flow channel 62 by the guide first body 931 and a water stream C2 flowing in the longitudinal direction of the chamber supply flow channel 62 by the guide second body 932. Accordingly, the washer 9 equipped with the guide first body 931 and the guide second body 932 may wash the inside of the chamber supply flow channel 62 with a strong water stream.

In one example, the washer 9 may further include a branching portion 933 that splits the water C1 flowing along the guide first body 931 into the water stream C2 flowing to the guide second body 932 and a water stream C3 flowing along the longitudinal direction of the chamber supply flow channel 62 (the -X-axis direction).

The laundry treating apparatus 100 having the above-described structure may wash the inlet connector 4 and the chamber supply flow channel 62 by controlling the number of rotations of the drum body 31.

When the number of rotations of the drum body 31 is increased, water inside the tub body 21 may form the water stream that circulates along the circumferential surface of the tub body 21, and the foreign substances remaining in the inlet connector 4 and in the chamber supply flow channel 62 may be removed by the water stream. This may be achieved because the detergent supply 5 is able to open and close the flow channel that supplies the detergent to the tub body 21 with the supply pump 53.

In a laundry treating apparatus that does not have a means to open and close the flow channel that supplies the detergent to the tub body 21, when the number of rotations of the drum body 31 is increased and water inside the tub body 21 is circulated along the circumferential surface of the tub body 21, a problem in which water in the tub body 21 is introduced into the detergent supply may occur. However, in the laundry treating apparatus 100, even when the number of rotations of the drum body 31 is increased, the above-described problem does not occur.

Hereinafter, an example of a method for controlling the laundry treating apparatus that may implement the above-described effect will be described.

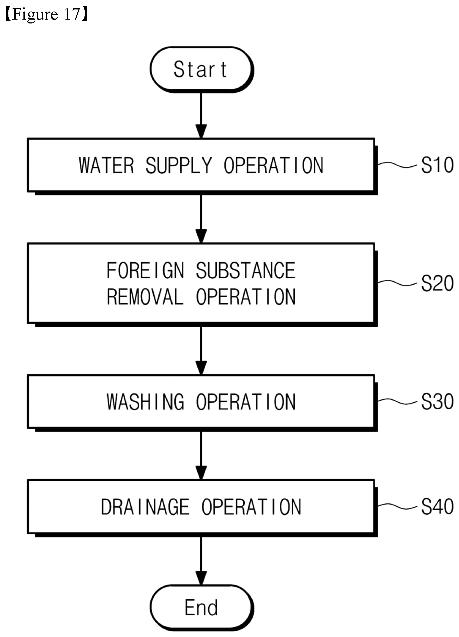

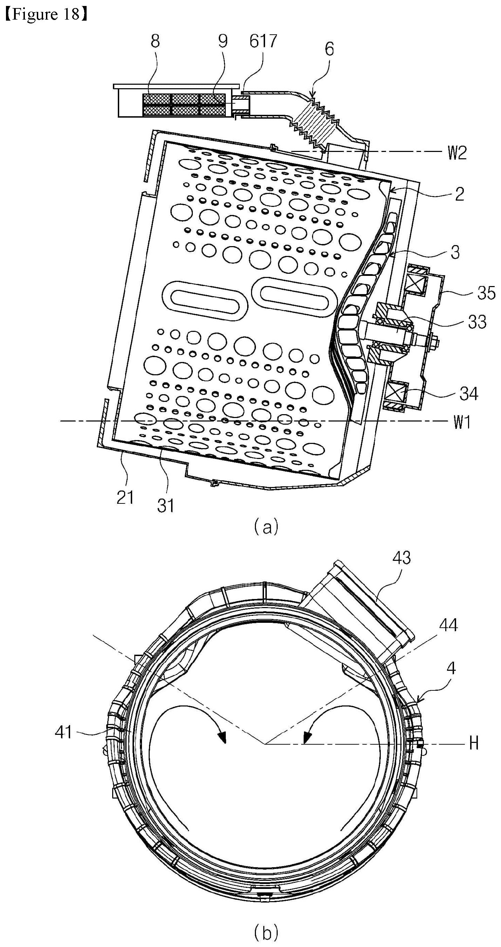

As shown in FIG. 17, the control method includes a water supply operation (S10) and a washing operation (S30). As shown in (a) in FIG. 18, the water supply operation (S10) may be an operation of supplying water to the tub body 21 until a reference water level W1 set higher than a vertical level of a lowermost end of the drum body 31 is reached.

The water supply operation (S10) is a process in which a controller (not shown) controls the water supply valve 233 to supply water to the tub body 21. The controller may determine an amount of water supplied to the tub body 21 via a water level sensor (not shown, a means for sensing a water level inside the tub body).

The reference water level W1 is a value set to obtain power from the drum body 31 required for water to flow along the inner circumferential surface of the tub body 21. When the reference water level W1 is high, a large amount of water will circulate along the inner circumferential surface of the tub body 21, making it easy to clean the inlet connector 4 or the chamber supply flow channel 62. However, when the reference water level W1 is too high, a possibility that water may flow back into the air supply 6 via the air supply flow channel 43 disposed in the inlet connector 4 is not able to be ruled out. Therefore, it is preferable that the reference water level W1 is set higher than the vertical level of the lowermost end of the drum body 31 and lower than a vertical level of a lowermost end of the inlet connector 4.

The washing operation (S30) is an operation of rotating the drum body 31 at a preset cleaning rotation number such that water inside the tub body 21 circulates along the inner circumferential surface of the tub body. The cleaning rotation number may be set to various numbers of rotations as long as water inside the tub body 21 may be introduced into the chamber supply flow channel 62.

The cleaning rotation number may be set to a number of rotations that raises a level of water inside the tub body 21 to a point lower than a connection point 617 of the chamber supply flow channel 62 and the filtration chamber 611. (a) in FIG. 18 shows an example in which the cleaning rotation number is set to a number of rotations that raises the level of water in the tub body 21 to a vertical level W2 of at least a partial area of the corrugated pipe 621.

When the drum body 31 is rotated with the cleaning rotation number described above, the water stream that flows along the circumferential surface of the tub body may be formed inside the tub body 21, and a portion of the water stream may clean the connection body 41 of the inlet connector. That is, in the washing operation, the portion of the water stream inside the tub body 21 is supplied to a circumferential surface of the connection body 41, and in this process, foreign substances remaining in the connection body 41 are able to be removed.

In one example as shown in (b) in FIG. 18, because the connection body 41 includes the air supply flow channel 43 to which the tub supply flow channel 63 of the air supply is connected, when the water stream inside the tub body 21 is too strong, water may be introduced into the air supply flow channel 43.

Such phenomenon is more likely to occur as a connection point 44 of the tub supply flow channel 63 and the connection body 41 is lower. Therefore, it is preferable that the connection point 44 of the tub supply flow channel 63 and the connection body 41 is set higher than the horizontal line H passing through the center of the connection body 41.

In addition, to minimize the phenomenon of water being introduced into the air supply flow channel 43, it is preferable that the cleaning rotation number is set to a number of rotations that raises the vertical level of water inside the tub body 21 to a point lower than the connection point 44.

With the water supply operation (S10) and the washing operation (S30) described above, the control method enables the cleaning of the chamber supply flow channel 62 and the connection body 41.

Furthermore, the control method may further include a foreign substance removal operation (S20) of spraying water into the chamber supply flow channel 62 via the washer 9. The foreign substance removal operation (S20) may be executed before start of the washing operation (S30) or may be executed during execution of the washing operation (S30). FIG. 17 shows a case in which the foreign substance removal operation (S20) is executed before the start of the washing operation (S30) as an example.

As described above, the washer 9 may receive water via a cleaning water supply pipe 234 branched from the tub water supply pipe 231 that supplies water to the tub body 21. In this case, the foreign substance removal operation (S20) will be executed together with the water supply operation (S10).

However, when a cleaning water valve (not shown) that controls opening and closing of the cleaning water supply pipe 234 is disposed, the foreign substance removal operation (S30) will be able to be performed during execution of the water supply operation (S10), during the execution of the washing operation (S30), or after completion of the washing operation (S30).

Unlike the above, even when the washing water supply pipe 234 is constructed as a flow channel that directly connects the washer 9 with the water supply source, but is controlled in opening and closing by the washing water valve, the foreign substance removal operation (S20) will be able to be executed during the execution of the water supply operation (S10), during the execution of the washing operation (S30), or after the completion of the washing operation (S30).

After the completion of the washing operation (S30), the control method may execute a drainage operation (S40) of discharging water inside the tub body 21. Accordingly, the foreign substances removed from the chamber supply flow channel 62 or the connection body 41 may be discharged to the outside of the tub body 21.

The above-described control method has been described based on the case in which the cleaning rotation number is set to the number of rotations that may clean the chamber supply flow channel 62 and the connection body 41, but the cleaning rotation number may be set to a number of rotations that may wash only one of the chamber supply flow channel 62 and the connection body 41.

The laundry treating apparatus and the method for controlling the same described above describe an example of the present disclosure, so that the scope of the rights of the present disclosure is not limited to the structure or the control method illustrated in the drawings.

## Claims

1. A laundry treating apparatus comprising:
a cabinet including a front panel with a laundry inlet defined therein, a rear panel forming a rear surface, a top panel forming a top surface, and a first side panel and a second side panel forming both side surfaces;
a tub including a tub body disposed inside the cabinet to store water therein and a tub inlet defined in the tub body and in communication with the laundry inlet;
a drum rotatably disposed inside the tub to store laundry therein;
an air supply including a chamber body positioned between the top panel and the tub body, a filtration chamber and a heat exchange chamber disposed in the chamber body and in communication with each other, a chamber supply flow channel guiding air inside the tub body to the filtration chamber, and a tub supply flow channel guiding air discharged from the heat exchange chamber to the tub body;
a filter disposed in the filtration chamber and configured to filter air; and
a heat exchanger assembly disposed in the heat exchange chamber and configured to sequentially perform dehumidification and heating of air supplied from the filtration chamber,
wherein at least two surfaces of the chamber body are fixed to the cabinet and positioned between the tub body and the top panel.

2. The laundry treating apparatus of claim 1, further comprising a front support frame fixed inside the cabinet so as to be positioned between the front panel and the chamber body,
wherein the chamber body has one end fixed to the upper support frame and the other end fixed to the rear panel.

3. The laundry treating apparatus of claim 2, wherein the front support frame is fixed to the front panel and positioned at the rear of the front panel, or is fixed to the first side panel and the second side panel and positioned at the rear of the front panel.

4. The laundry treating apparatus of claim 1, further comprising:
a front support frame fixed inside the cabinet so as to be positioned between the front panel and the chamber body; and
a rear support frame fixed inside the cabinet so as to be positioned between the rear panel and the chamber body,
wherein one end of the chamber body is fixed to the front support frame and the other end of the chamber body is fixed to the rear support frame.

5. The laundry treating apparatus of claim 2, further comprising an upper support frame fixed to the first side panel and the second side panel and positioned between the top panel and the chamber body, wherein a top surface of the chamber body is fixed to the upper support frame.

6. The laundry treating apparatus of claim 5, wherein the heat exchanger assembly includes a first heat exchanger disposed in the heat exchange chamber to dehumidify air supplied from the filtration chamber, a second heat exchanger disposed in the heat exchange chamber to heat air that has passed through the first heat exchanger, a refrigerant pipe providing a circulation flow channel for a refrigerant and passing through the first heat exchanger and the second heat exchanger, and a compressor located outside the heat exchange chamber to allow the refrigerant to flow along the refrigerant pipe,
wherein the air supply further includes a compressor mounting portion extending from the chamber body toward the rear panel and located above the tub body, wherein the compressor mounting portion provides a space where the compressor is fixed.

7. The laundry treating apparatus of claim 6, further comprising:
a front surface fastener disposed on the chamber body and fixed to the front support frame;
a rear surface fastener disposed on the chamber body and fixed to the rear panel; and
a top surface fastener disposed on the chamber body and fixed to the upper support frame.

8. The laundry treating apparatus of claim 7, further comprising a front fixing hole extending through the front support frame,
wherein the front surface fastener is formed as a fastening protrusion protruding from the chamber body toward the front support frame and inserted into the front fixing hole.

9. The laundry treating apparatus of claim 8, further comprising an insulator disposed in the front fixing hole and surrounding a circumferential surface of the front surface fastener.

10. The laundry treating apparatus of claim 7, wherein the top surface fastener is disposed to connect the compressor mounting portion with the upper frame.

11. The laundry treating apparatus of claim 7, further comprising a rear panel first through-hole and a rear panel second through-hole defined to extend through the rear panel,
wherein the rear surface fastener includes a support protrusion protruding from the compressor mounting portion and inserted into the rear panel first through-hole, wherein the support protrusion is able to set a location of the chamber body, and a fastening groove defined in the compressor mounting portion, wherein a bolt inserted into the rear panel second through-hole is fixed inside the fastening groove.

12. The laundry treating apparatus of claim 1, wherein the filtration chamber and the heat exchange chamber are arranged parallel to a width direction of the tub body,
wherein the chamber supply flow channel connects an upper circumferential surface of the tub body with the filtration chamber, but is disposed parallel to a longitudinal direction of the tub body.

13. The laundry treating apparatus of claim 1, further comprising a mounting hole extending through the top panel and in communication with the filtration chamber, wherein the filter is detachable from the filtration chamber via the mounting hole.

14. The laundry treating apparatus of claim 13, wherein the filter includes:
a cover having a shape to close the mounting hole;
a support body fixed to the cover and positioned inside the filtration chamber; and
a mesh disposed on the support body to remove foreign substances from air.
